# EUROPÄISCHE PATENTSCHRIFT

(11) **EP 3 863 415 B1**
(45) Veröffentlichungstag und Bekanntmachung des Hinweises auf die Patenterteilung: **07.06.2023**
(21) Anmeldenummer: 19789624.4
(22) Anmeldetag: 10.10.2019
(51) Int. Cl.: C11B 11/00, A23G 3/54, A23G 3/40, A23G 3/48, A23G 3/34

(54) **MIT APFELWACHS BESCHICHTETES BONBON**
CONFECTIONERY COATED WITH APPLE WAX
BONBON ENROBÉ AVEC DE LA CIRE DE POMME

(30) Priorität: 10.10.2018 DE 102018217341
(43) Veröffentlichungstag der Anmeldung: 18.08.2021
(73) Patentinhaber: Katjes Fassin GmbH. + Co. Kommanditgesellschaft, 46446 Emmerich (DE)
(72) Erfinder: AYDIN, Bülent, 46446 Emmerich (DE)
(74) Vertreter: Herzog IP Patentanwalts GmbH
(86) Internationale Anmeldenummer: PCT/EP2019/077531
(87) Internationale Veröffentlichungsnummer: WO 2020/074668

(56) Entgegenhaltungen:
- US-A- 5 587 174
- US-A1- 2009 202 683
- US-A1- 2015 223 477

## Beschreibung

Die vorliegende Erfindung betrifft eine Süßware umfassend einen Kern und eine den Kern begrenzende äußere Oberfläche, wobei zumindest ein Teil der äußeren Oberfläche des Kerns, vorzugsweise die gesamte äußere Oberfläche des Kerns, mit einem Überzugsmittel beschichtet ist, ein Verfahren zur Herstellung einer Süßware, die durch dieses Verfahren erhältliche Süßware sowie die Verwendung von Apfelwachs.

Süßwaren sind ein weit verbreitetes und gemeinhin beliebtes Genussmittel. Eine grundsätzlich im Stand der Technik bekannte Art Süßwaren herzustellen beinhaltet ein Gießen einer flüssigen Süßwarenvorläufermasse in eine ein- oder mehrteilige Form. Zu den Süßwaren, die im Stand der Technik auf diese grundsätzliche Art hergestellt werden, gehören fetthaltige Süßwaren und Süßwaren aus einer Zuckermasse (Zuckerwaren). Eine fetthaltige Süßware ist beispielsweise Schokolade. Zu den Süßwaren aus einer Zuckermasse zählen Bonbons. Bei den Bonbons wird zwischen Hartbonbons und Weichbonbons unterschieden. Zu den Hartbonbons sind auch medizinisch wirksame Bonbons wie Hustenbonbons zu zählen. Ist ein Hartbonbon mit einem Stiel zum Festhalten versehen, spricht man von einem Lutscher. Weichbonbons sind zum Beispiel Fruchtgummis, Lakritz, Toffees und Kaubonbons.

Bonbons können mittels Prägemaschinen oder auch durch das Gießen einer Bonbonvorläufermasse in eine Form aus Metall, aus mit Gummi beschichtetem Metall, aus Gummi oder aus einem formstabilen Kunststoff und anschließendes Aushärten der Masse hergestellt werden. Endsprechende Verfahren zur Herstellung eines solchen Bonbons sind beispielsweise in der DE 872 149 C, der DE 872 149 C, der DE 10 2007 031 747 A1 oder der DE 40 04 688 A1 beschrieben.

Um zu verhindern, dass Bonbons, insbesondere Fruchtgummis, während der späteren Lagerung aneinanderhaften, werden sie üblicherweise mit einem Überzugsmittel beschichtet, welches der Oberfläche der Fruchtgummis auch den erwünschten Glanz verleiht. Darüberhinaus verbessern die Überzugsmittel auch die Haltbarkeit und die Festigkeit der Lebensmittel.

Aus dem Stand der Technik ist bekannt, eine Mischung aus Pflanzenöl, Antioxidationsmitteln und Wachs als Überzugsmittel für Lebensmittel einzusetzen, wobei als Wachs üblicherweise Bienenwachs (E 901), Candelillawachs (E 902; eine natürliche Substanz, die aus den Blättern einer mexikanischen Wüstenpflanze gewonnen wird), Carnaubawachs (E 903; eine natürliche Substanz, die aus der Blattoberfläche einer Wachspalme hergestellt wird), Schellack (E 904; ein natürliches Harz, das aus Gummilack hergestellt wird, der aus wiederum aus den Ausscheidungen der Lackschildläuse gewonnen wird) oder Mischungen dieser Wachse eingesetzt werden. Im Falle von Süßwaren wie Fruchtbonbons kommt insbesondere Bienenwachs als Bestandteil des Überzugsmittels in Betracht.

US 2009/202683 A1 offenbart ein Konfekt, umfassend einen ersten Kaukern, eine zweite Schicht, die mindestens eine Lebensmittelsäure umfasst, und eine dritte Schicht, die einen zusammengesetzten Überzug umfasst, wobei die zweite Schicht zwischen dem Kaukern und dem zusammengesetzten Überzug angeordnet ist. Der Einsatz von Apfelwachs wird in diesem Stand der Technik nicht offenbart.

US 2015/223477 A1 offenbart ein Lebensmittelprodukt, das sich als Greifsnack eignet und das einen leichten und knusprigen, im wesentlichen rollbaren Kern umfasst, der aus einem Teig auf der Basis von Getreide, Wasser, Backtriebmittel und gegebenenfalls weiteren Aromastoffen gebacken ist. Diese Kern ist zumindest teilweise umgeben mit einer Umhüllung auf der Basis von fein gemahlenen Keksen und einer Fettphase. Auch in diesem Stand der Technik wird der Einsatz von Apfelwachs nicht offenbart.

Allgemein ist es eine Aufgabe der vorliegenden Erfindung, einen Nachteil, der sich aus dem Stand der Technik ergibt, zumindest teilweise zu überwinden. Eine Aufgabe der Erfindung ist es insbesondere, mit einem Überzugsmittel beschichtete, vorzugsweise vegane Süßwaren bereitzustellen, welche im Vergleich zu den aus dem Stand der Technik bekannten, mit Bienenwachs und/oder Carnaubawachs beschichteten Süßwaren eine verminderte Tendenz, aneinander zu haften, und damit auch eine verbessere Lagerungsstabilität aufweisen. Eine weitere Aufgabe der vorliegenden Erfindung ist es, mit einem Überzugsmittel beschichtete, vorzugsweise vegane Süßwaren bereitzustellen, bei denen das Überzugsmittel im Vergleich zu den aus dem Stand der Technik bekannten, Bienenwachs und/oder Carnaubawachs beinhaltenden Überzugsmitteln die Farbe der Süßwaren weniger stark beeinflusst. Eine weitere Aufgabe der vorliegenden Erfindung ist es, mit einem Überzugsmittel beschichtete, vorzugsweise vegane Süßwaren bereitzustellen, welche im Vergleich zu den aus dem Stand der Technik bekannten Süßwaren mit Bienenwachs und/oder Carnaubawachs als Bestandteil des Überzugsmittels eine verbesserte thermische Stabilität aufweisen. Auch lag der vorliegenden Erfindung die Aufgabe zugrunde, mit einem Überzugsmittel beschichtete, vorzugsweise vegane Süßwaren bereitzustellen, welche im Vergleich zu den aus dem Stand der Technik bekannten Zuckerwaren mit Bienenwachs und/oder Carnaubawachs als Bestandteil des Überzugsmittel einen verbesserten Glanz aufweisen. Eine Aufgabe der Erfindung ist es auch, mit einem Wachs beschichtete, vorzugsweise vegane Süßwaren bereitzustellen, welche im Vergleich zu den aus dem Stand der Technik bekannten und mit Bienenwachs und/oder Carnaubawachs beschichteten Süßwaren mit weniger Wachs beschichtet sind und dennoch einen vergleichbaren Glanz und/oder eine vergleichbarer Tendenz, aneinander zu haften, aufweisen. Darüber hinaus lag der vorliegenden Erfindung die Aufgabe zugrunde, mit einem Überzugsmittel beschichtete, vorzugsweise vegane Süßwaren bereitzustellen, welche im Vergleich zu den aus dem Stand der Technik bekannten Süßwaren mit Bienenwachs und/oder Carnaubawachs als Bestandteil des Überzugsmittels eine verbesserte Versiegelung der Oberfläche durch das Überzugsmittel aufweisen und demnach das Lebensmittel noch besser vor Geruchs-, Geschmacks- und Feuchtigkeitsverlusten schützen.

Ein Beitrag zur mindestens teilweisen Erfüllung mindestens einer dieser Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet eine Süßware umfassend einen Kern und eine den Kern begrenzende äußere Oberfläche, wobei zumindest ein Teil der äußeren Oberfläche des Kerns, vorzugsweise die gesamte äußere Oberfläche des Kerns, mit einem Überzugsmittel beschichtet ist,
dadurch gekennzeichnet, dass das Überzugsmittel Apfelwachs beinhaltet.

Als Form für den Kern kommen alle dem Fachmann bekannten Formen einer Süßware, vorzugsweise eine Zuckerware, noch mehr bevorzugt eines Bonbons, in Betracht. Gemäß einer bevorzugten Ausführungsform des Kerns beinhaltet die Oberfläche auf zumindest einer Seite des Kerns ein Relief. Ein bevorzugtes Relief beinhaltet ein geprägtes Muster oder eine geprägte figurative Darstellung oder beides. Eine bevorzugte figurative Darstellung beinhaltet eines ausgewählt aus der Gruppe bestehend aus einem Zeichen, einem Buchstaben, einer Zahl und einer plastische Nachbildung oder eine Kombination von mindestens zwei davon. Eine bevorzugte plastische Nachbildung ist eine Nachbildung von einem ausgewählt aus der Gruppe bestehend aus einem Gegenstand, einem Transportmittel, einem Lebewesen, einem Lebensmittel, einem Nahrungsmittel und einem Bestandteil von einem der Vorgenannten oder eine Kombination aus mindestens zwei davon. Ein bevorzugtes Transportmittel ist eines ausgewählt aus der Gruppe bestehend aus einem Zug, einem Automobil und einem Flugzeug oder eine Kombination von mindestens zwei davon. Ein bevorzugtes Lebewesen ist eines ausgewählt aus der Gruppe bestehend aus einem Mensch, einem Tier und einer Pflanze oder eine Kombination aus mindestens zwei davon. Ein bevorzugtes Lebensmittel ist eine Frucht. Ein bevorzugtes Nahrungsmittel ist eine Frucht. Hierbei ist es unbeachtlich wie lebensecht, verfremdet oder idealisiert die plastische Nachbildung gegenüber einem Vorbild ist.

Die erfindungsgemäße Süßware ist vorzugsweise eine Zuckerware, insbesondere ein Bonbon, ganz besonders bevorzugt ein Weichbonbon, wie beispielsweise ein Kaubonbon, ein Fruchtgummi oder ein Toffee, oder ein Hartbonbon, wie beispielsweise ein Hustenbonbon oder ein Lutscher.

Ein Weichbonbon hat eine hochviskose, zähe Konsistenz. Weichbonbons werden bevorzugt beim Verzehr gekaut. Bei dem Kauen löst sich das Weichbonbon bevorzugt nach und nach auf. Ein Weichbonbon kann einen Wassergehalt in einem Bereich von 1 bis 20 Gew.-%, von 5 bis 20 Gew.-%, von 10 bis 20 Gew.-% oder von 15 bis 20 Gew.-%, jeweils bezogen auf das Gesamtgewicht des Weichbonbons, haben. Ein bevorzugtes Weichbonbon ist elastisch verformbar. Ein besonders bevorzugtes Weichbonbon hat eine Shore-Härte A von 70 oder kleiner, bevorzugt von 65 oder kleiner, bevorzugter von 60 oder kleiner, bevorzugter von 55 oder kleiner, bevorzugter von 50 oder kleiner, bevorzugter von 45 oder kleiner, bevorzugter von 40 oder kleiner, bevorzugter von 35 oder kleiner, bevorzugter von 30 oder kleiner, bevorzugter von 25 oder kleiner, bevorzugter von 20 oder kleiner, noch bevorzugter von 20 oder kleiner, noch bevorzugter von 15 oder kleiner, am bevorzugtesten von 10 oder kleiner. Ein weiteres bevorzugtes Weichbonbon ist eines ausgewählt aus der Gruppe bestehend aus einem Fruchtgummi, einem Weingummi, einem Toffee und einem Kaubonbon oder eine Kombination von mindestens zwei davon. Ein weiteres bevorzugtes Weichbonbon beinhaltet ein Hydrokolloid. Ein bevorzugtes Hydrokolloid ist Gelatine. Ein besonders bevorzugtes Weichbonbon beinhaltet keinen Inhaltsstoff tierischen Ursprungs, ist also vegan. Weiterhin ist es bevorzugt, dass das erfindungsgemäße Weichbonbon weniger als 0,5 g/kg Weichbonbon, vorzugsweise weniger als 0,2 g/kg Weichbonbon und weiterhin bevorzugt weniger als 0,1 g/kg Weichbonbon Theobromin oder ein Theobrominderivat aufweist. Ferner ist es bevorzugt, dass das erfindungsgemäße Weichbonbon kein Theobromin oder ein Theobrominderivat aufweist. Zudem ist es bevorzugt, dass das erfindungsgemäße Weichbonbon weniger als 15 Gew.-% des Weichbonbons, vorzugsweise weniger als 5 Gew.-% des Weichbonbons und weiterhin bevorzugt weniger als 0,1 Gew.-% des Weichbonbons Kakaobutter aufweist. Ferner ist es bevorzugt, dass das erfindungsgemäße Weichbonbon keine Kakaobutter aufweist.

Ein Hartbonbon ist bevorzugt hart und spröde. Ein bevorzugtes Hartbonbon ist nicht elastisch verformbar. Ein bevorzugtes Hartbonbon beinhaltet ein glasartiges Gebilde. Ein weiteres bevorzugtes Hartbonbon hat einen Wassergehalt in einem Bereich von 1 bis 4 Gew.-%, bevorzugt in einem Bereich von 1 bis 3 Gew.-%, bezogen auf das Gesamtgewicht des Hartbonbons. Hartbonbons werden bevorzugt beim Verzehr gelutscht. Man spricht auch von Lutschbonbons. Der Begriff Hartbonbon beinhaltet auch Hartbonbons mit einem Stiel, welche Lutscher genannt werden. Ein ganz besonders bevorzugtes Hartbonbon hat eine Shore-Härte A von größer als 70, bevorzugt größer als 75, bevorzugter größer als 80, bevorzugter größer als 85, bevorzugter größer als 90, noch bevorzugter größer als 95, am bevorzugtesten von 100. Ein weiteres bevorzugtes Hartbonbon ist hygroskopisch. Ein weiteres bevorzugtes Hartbonbon hat einen GF-Wert von weniger als 30 %. Ein weiteres bevorzugtes Hartbonbon beinhaltet keine Gelatine.

Hergestellt wird eine Süßware aus einer Süßwarenvorläufermasse beinhaltend als wesentlichen Bestandteil einen Zucker oder einen Zuckeraustauschstoff oder beides. Ein bevorzugter Zucker ist einer ausgewählt aus der Gruppe bestehend aus einem Polysaccharid, Saccharose, Glucose, Fruktose und Invertzucker oder eine Kombination von mindestens zwei davon. Ein bevorzugter Zuckeraustauschstoff ist einer ausgewählt aus der Gruppe bestehend aus Isomalt, Mannit, Sorbit, Xylit und Polydextrose oder eine Kombination von mindestens zwei davon. Eine weitere bevorzugte Süßwarenvorläufermasse beinhaltet weiter eines ausgewählt aus der Gruppe bestehend aus einer Milchzubereitung, einem pflanzlichen Fett, einem Emulgator, einer Farbmischung, einem Öl, einem Wirkstoff, einem Pflanzenextrakt und einem Aroma oder eine Kombination aus mindestens zwei davon. Ein bevorzugtes Öl ist ein ätherisches Öl. Ein bevorzugtes ätherisches Öl ist eines ausgewählt aus der Gruppe bestehend aus einem Eukalyptusöl, einem Minzöl und einem Menthol oder eine Kombination von mindestens zwei davon. Ein bevorzugter Wirkstoff zeigt eines ausgewählt aus der Gruppe bestehend aus einer schleimlösenden Wirkung, einer schmerzbetäubenden Wirkung, einer schwellungslindernden Wirkung und einer entzündungshemmenden Wirkung oder eine Kombination von mindestens zwei davon. Ein bevorzugter Pflanzenextrakt ist einer ausgewählt aus der Gruppe bestehend aus einem Kräuterextrakt, einem Wurzelextrakt und einem Rindenextrakt oder eine Kombination von mindestens zwei davon. Ein bevorzugter Kräuterextrakt ist ein Extrakt aus einem ausgewählt aus der Gruppe bestehend aus Salbei, Spitzwegerich, Schlüsselblume und Eibisch oder eine Kombination von mindestens zwei davon. Ein bevorzugter Wurzelextrakt ist ein Süßholzwurzelextrakt, oft auch als Lakritze bezeichnet. Ein bevorzugtes Aroma ist ein künstliches Aroma oder ein natürliches Aroma oder beides. Ein weiteres bevorzugtes Aroma ist ein Fruchtaroma.

Gemäß einer bevorzugten Ausführungsform der erfindungsgemäßen Süßware beinhaltet das Überzugsmittel Apfelwachs, Pflanzenöl und mindestens ein Antioxidationsmittel.

Bevorzugte Pflanzenöle sind insbesondere Sonnenblumenöl, Sojaöl, Erdnußöl, Rapsöl, Sesamöl, Safloröl, Tallöl, Leinöl, Rüböl, Senföl, Olivenöl, Teesamenöl, Maisöl, Weizenkeimöl, Korianderöl, Distelöl, Färberdistelöl, Borretschöl, Nachtkerzenöl, Fenchelöl oder Johannesbeersamenöl oder ein Gemisch aus mindestens zwei dieser Öle, wobei der Einsatz von Sonnenblumenöl besonders bevorzugt ist.

Bevorzugte Antioxidationsmittel sind beispielsweise Butylhydroxyanisol, Butylhydroxytoluol, Guajakharz, Lecithin, Nordihydroguajaretsäure, Propylgallat, Octylgallat, Dodecylgallat, Tocopherole, Trihydroxybutyrophenon, Ascorbinsäure, Ascorbylpalmitat, Dilaurylthiodipropionat, Distearylthiodipropionat, Monoisopropylcitrat, Thiodipropionsäure, Citraconsäure oder eine Kombination aus mindestens zwei dieser Antioxidantien, wobei der Einsatz von fett- oder öllöslichen Antioxidantien wie α-Tocopherol (Vitamin E) besonders bevorzugt ist.

Gemäß einer bevorzugten Ausführungsform der erfindungsgemäßen Süßware beinhaltet das Überzugsmittel
- 1 bis 20 Gew.-%, besonders bevorzugt 2,5 bis 17,5 Gew.-% und am meisten bevorzugt 5 bis 15 Gew.-% Apfelwachs,
- 50 bis 98 Gew.-%, besonders bevorzugt 60 bis 97 Gew.-% und am meisten bevorzugt 70 bis 96 Gew.-% Pflanzenöl, sowie
- 0,1 bis 5 Gew.-%, besonders bevorzugt 0,25 bis 2,5 Gew.-% und am meisten bevorzugt 0,5 bis 1,5 Gew.% mindestens eines Antioxidationsmittels,
wobei die Mengenangaben jeweils bezogen auf das Gesamtgewicht des Überzugsmittels sind.

Gemäß einer weiteren bevorzugten Ausführungsform der erfindungsgemäßen Süßware beinhaltet das Überzugsmittel
- 1 bis 20 Gew.-%, besonders bevorzugt 2,5 bis 17,5 Gew.-% und am meisten bevorzugt 5 bis 15 Gew.-% Apfelwachs,
- 75 bis 98 Gew.-%, besonders bevorzugt 80 bis 97 Gew.-% und am meisten bevorzugt 83,5 bis 94 Gew.-% Pflanzenöl, sowie
- 0,1 bis 5 Gew.-%, besonders bevorzugt 0,25 bis 2,5 Gew.-% und am meisten bevorzugt 0,5 bis 1,5 Gew.% mindestens eines Antioxidationsmittels,
wobei die Mengenangaben jeweils bezogen auf das Gesamtgewicht des Überzugsmittels sind und in der Summe vorzugsweise 100 Gew.-% ergeben.

Es ist weiterhin erfindungsgemäß bevorzugt, dass die Süßware das Apfelwachs in eine Menge in einem Bereich von 0,001 bis 0,1 Gew.-%, besonders bevorzugt in einem Bereich von 0,005 bis 0,05 Gew.-% und am meisten bevorzugt in einem Bereich von 0,005 bis 0,025 Gew.-%, jeweils bezogen auf das Gewicht der Süßware, beinhaltet. Weiterhin ist es erfindungsgemäß bevorzugt, dass die Süßware das Überzugsmittel in einer Menge in einem Bereich von 0,01 bis 1 Gew.-%, besonders bevorzugt in einem Bereich von 0,05 bis 0,5 Gew.-% und am meisten bevorzugt in einem Bereich von 0,1 bis 0,25 Gew.-%, jeweils bezogen auf das Gewicht der Süßware, beinhaltet.

Das in dem Überzugsmittel enthaltene Apfelwachs kann durch alle dem Fachmann bekannten Verfahren zur Gewinnung von Apfelwachs aus Apfelschalen erhalten werden. Vorzugsweise ist das Apfelwachs erhältlich durch ein Verfahren umfassend die Verfahrensschritte:
i) Extraktion einer Apfelschalen beinhaltenden Zusammensetzung mit organischen Lösungsmitteln, vorzugsweise mit einem organischen Lösungsmittel ausgewählt aus der Gruppe bestehend aus Alkoholen wie beispielsweise Ethanol, Ethern, Kohlenwasserstoffen, halogenierten Kohlenwasserstoffen wie beispielsweise Chloroform, oder einer Mischung aus mindestens zwei davon;
ii) zumindest teilweises Verdampfen des organischen Lösungsmittels aus dem Extrakt unter Erhalt von Apfelwachs.

Eine geeignete Apfelschalen beinhaltende Zusammensetzung, welche im Verfahrensschritt i) eingesetzt wird, ist entpektinisierter Apfeltrester, der als Abfallprodukt in der Pektin herstellenden Industrie anfällt. Ein Verfahren zur Herstellung von Apfelwachs aus entpektinisiertem Apfeltrester ist beispielsweise in der WO 93/17083 A1 beschrieben.

Weiterhin ist es erfindungsgemäß bevorzugt, dass das Apfelwachs mindestens eine der folgenden Eigenschaften, vorzugsweise jedoch beide der folgenden Eigenschaften verwirklicht:
(α) einen Gehalt an Nonacosan in einem Bereich von 10 bis 50 Gew.-%, bevorzugt in einem Bereich von 15 bis 40 Gew.-% und am meisten bevorzugt in einem Bereich von 20 bis 35 Gew.-%, jeweils bezogen auf das Gesamtgewicht des Apfelwaches;
(β) einen Gehalt an Urolsäure in einem Bereich von 20 bis 80 Gew.-%, bevorzugt in einem Bereich von 25 bis 70 Gew.-% und am meisten bevorzugt in einem Bereich von 35 bis 70 Gew.-%, jeweils bezogen auf das Gesamtgewicht des Apfelwaches.

Einen Beitrag zur Lösung der eingangs genannten Aufgaben leistet auch ein Verfahren zur Herstellung einer Süßware, umfassend die Verfahrensschritte
I) Bereitstellen einer Süßwarenvorläufermasse;
II) Formen der Süßwarenvorläufermasse unter Erhalt eines Süßwarenvorläufers umfassend einen Kern und eine den Kern begrenzende äußere Oberfläche;
III) Beschichten von zumindest einem Teil der äußeren Oberfläche des Kerns, vorzugsweise der gesamten äußeren Oberfläche des Kerns, mit einem Überzugsmittel;
dadurch gekennzeichnet, dass das Überzugsmittel Apfelwachs beinhaltet.

Im Verfahrensschritt I) des erfindungsgemäßen Verfahrens wird zunächst eine Süßwarenvorläufermasse bereitgestellt. Eine Süßwarenvorläufermasse ist eine Masse, aus der durch Weiterverarbeitung eine Süßware hergestellt werden kann. Eine bevorzugte Süßwarenvorläufermasse beinhaltet als wesentlichen Bestandteil einen Zucker oder einen Zuckeraustauschstoff oder beides. Ein bevorzugter Zucker ist einer ausgewählt aus der Gruppe bestehend aus einem Polysaccharid, Saccharose, Glucose, Fruktose und Invertzucker oder eine Kombination von mindestens zwei davon. Ein bevorzugter Zuckeraustauschstoff ist einer ausgewählt aus der Gruppe bestehend aus Isomalt, Mannit, Sorbit, Xylit und Polydextrose oder eine Kombination von mindestens zwei davon. Eine weitere bevorzugte Hartbonbonmasse beinhaltet weiter eines ausgewählt aus der Gruppe bestehend aus einer Milchzubereitung, einem pflanzlichen Fett, einem Emulgator, einer Farbmischung, einem Öl, einem Wirkstoff, einem Pflanzenextrakt und einem Aroma oder eine Kombination aus mindestens zwei davon. Ein bevorzugtes Öl ist ein ätherisches Öl. Ein bevorzugtes ätherisches Öl ist eines ausgewählt aus der Gruppe bestehend aus einem Eukalyptusöl, einem Minzöl und einem Menthol oder eine Kombination von mindestens zwei davon. Ein bevorzugter Wirkstoff zeigt eines ausgewählt aus der Gruppe bestehend aus einer schleimlösenden Wirkung, einer schmerzbetäubenden Wirkung, einer schwellungslindernden Wirkung und einer entzündungshemmenden Wirkung oder eine Kombination von mindestens zwei davon. Ein bevorzugter Pflanzenextrakt ist einer ausgewählt aus der Gruppe bestehend aus einem Kräuterextrakt, einem Wurzelextrakt und einem Rindenextrakt oder eine Kombination von mindestens zwei davon. Ein bevorzugter Kräuterextrakt ist ein Extrakt aus einem ausgewählt aus der Gruppe bestehend aus Salbei, Spitzwegerich, Schlüsselblume und Eibisch oder eine Kombination von mindestens zwei davon. Ein bevorzugter Wurzelextrakt ist ein Süßholzwurzelextrakt, oft auch als Lakritze bezeichnet. Ein bevorzugtes Aroma ist ein künstliches Aroma oder ein natürliches Aroma oder beides. Ein weiteres bevorzugtes Aroma ist ein Fruchtaroma. Während des Formens in Verfahrensschritt II) hat eine Süßwarenvorläufermasse bevorzugt eine Verarbeitungstemperatur in einem Bereich von 120 bis 145 °C, bevorzugt in einem Bereich von 130 bis 155 °C, bevorzugter in einem Bereich von 140 bis 160 °C. Die Verarbeitungstemperatur, welche eine Süßwarenvorläufermasse während des Formens in Verfahrensschritt II) hat, ist so gewählt, dass sich die Süßwarenvorläufermasse durch gute Fließeigenschaften auszeichnet. In diesem Zustand wird die Süßwarenvorläufermasse als flüssig bezeichnet.

Im Verfahrensschritt II) des erfindungsgemäßen Verfahrens wird die Süßwarenvorläufermasse unter Erhalt eines Süßwarenvorläufers umfassend einen Kern und eine den Kern begrenzende äußere Oberfläche geformt. Gemäß einer Ausführungsform des erfindungsgemäßen Verfahrens erfolgt dieses Formen dadurch, dass die Süßwarenvorläufermasse mittels einer eine Austrittsöffnung aufweisenden Düse durch Überlagern eines Substrats mit der Süßwarenvorläufermasse unter Erhalten eines Formkörpers geformt wird, wie dies beispielsweise in der WO 2016/113318 A1 beschrieben ist. Gemäß einer anderen Ausführungsform des erfindungsgemäßen Verfahrens erfolgt dieses Formen dadurch, dass ein Träger bereitgestellt wird, tragend ein Pulver, wobei das Pulver eine Pulverspiegeloberfläche beinhaltet, wobei die Pulverspiegeloberfläche eine Vielzahl von Negativformen beinhaltet, und dann in einem weiteren Verfahrensschritt die Negativformen mit der Süßwarenvorläufermasse befüllt werden. Ein solches Verfahren ist beispielsweise in der DE 10 2014 009321 A1 beschrieben.

Nachdem die Süßwarenvorläufermasse beispielsweise mittels des in der WO 2016/113318 A1 oder des in der DE 10 2014 009321 A1 beschriebenen Verfahrens unter Erhalt eines Süßwarenvorläufers umfassend einen Kern und eine den Kern begrenzende äußere Oberfläche geformt worden ist, wird die Süßwarenvorläufermasse gehärtet, wobei das Härten ein Trocknen (beispielsweise im Falle des in der WO 2016/113318 A1 beschriebenen Verfahrens) oder ein Abkühlen, insbesondere ein Abkühlen durch einen aktiven Kühlvorgang oder passiv oder beides (beispielsweise im Falle des in der DE 10 2014 009321 A1 beschriebenen Verfahrens) sein kann.

Nachdem auf die vorstehend beschriebene Art und Weise ein Süßwarenvorläufer erhalten worden ist, wird im Verfahrensschritt III) zumindest ein Teil der äußeren Oberfläche des Kerns, vorzugsweise die gesamte äußere Oberfläche des Kerns, mit einem Überzugsmittel beschichtet.

Die Beschichtung des Süßwarenvorläufers kann durch alle Verfahren erfolgen, die dem Fachmann geeignet erscheinen zur Beschichtung eines Süßwarenvorläufers, beispielsweise eines Weich- oder Hartbonbons, mit einem Überzugsmittel, vorzugsweise mit einem flüssigen Überzugsmittel. Diese Verfahren können ein Eintauchen des Süßwarenvorläufers in das Überzugsmittel, ein Bestreichen des Süßwarenvorläufers mit einem Überzugsmittels oder ein Besprühen oder Betropfen des Süßwarenvorläufers mit einem Überzugsmittel sein, wobei ein Besprühen mit einem flüssigen Überzugsmittel besonders bevorzugt ist. Dieses Besprühen erfolgt vorzugsweise in einem mit einer Sprühvorrichtung ausgestatten Mischer, so dass die Süßwarenvorläufer während des Sprühvorgangs gemischt und eine möglichst gleichmäßige Beschichtung des Süßwarenvorläufers mit dem Überzugsmittel sichergestellt werden kann. Die Temperatur, bei der das Beschichten des Süßwarenvorläufers mit dem Überzugsmittel erfolgt, hängt insbesondere vom Schmelzpunkt des Überzugsmittels ab. Die Temperatur wird so gewählt, dass das Überzugsmittel während des Sprühvorgangs flüssig ist und eine ausreichen geringe Viskosität aufweist, um eine gleichmäßiges Besprühen sicherzustellen. Im Falle von Fruchtgummis als Süßware erfolgt das Beschichten des Süßwarenvorläufers vorzugsweise in einer sogenannten Wachstrommel.

Das erfindungsgemäße Verfahren ist dadurch gekennzeichnet, dass das Überzugsmittel Apfelwachs beinhaltet. Gemäß einer bevorzugten Ausführungsform des erfindungsgemäßen Verfahrens beinhaltet das im Verfahrensschritt III) eingesetzte Überzugsmittel Apfelwachs, Pflanzenöl und mindestens ein Antioxidationsmittel.

Bevorzugte Pflanzenöle sind insbesondere Sonnenblumenöl, Sojaöl, Erdnußöl, Rapsöl, Sesamöl, Safloröl, Tallöl, Leinöl, Rüböl, Senföl, Olivenöl, Teesamenöl, Maisöl, Weizenkeimöl, Korianderöl, Distelöl, Färberdistelöl, Borretschöl, Nachtkerzenöl, Fenchelöl oder Johannesbeersamenöl oder ein Gemisch aus mindestens zwei dieser Öle, wobei der Einsatz von Sonnenblumenöl besonders bevorzugt ist.

Bevorzugte Antioxidationsmittel sind beispielsweise Butylhydroxyanisol, Butylhydroxytoluol, Guajakharz, Lecithin, Nordihydroguajaretsäure, Propylgallat, Octylgallat, Dodecylgallat, Tocopherole, Trihydroxybutyrophenon, Ascorbinsäure, Ascorbylpalmitat, Dilaurylthiodipropionat, Distearylthiodipropionat, Monoisopropylcitrat, Thiodipropionsäure, Citraconsäure oder eine Kombination aus mindestens zwei dieser Antioxidantien, wobei der Einsatz von fett- oder öllöslichen Antioxidantien wie α-Tocopherol (Vitamin E) besonders bevorzugt ist.

Gemäß einer bevorzugten Ausführungsform des erfindungsgemäßen Verfahrens beinhaltet das im Verfahrensschritt III) eingesetzte Überzugsmittel
- 1 bis 20 Gew.-%, besonders bevorzugt 2,5 bis 17,5 Gew.-% und am meisten bevorzugt 5 bis 15 Gew.-% Apfelwachs,
- 50 bis 98 Gew.-%, besonders bevorzugt 60 bis 97 Gew.-% und am meisten bevorzugt 70 bis 96 Gew.-% Pflanzenöl, sowie
- 0,1 bis 5 Gew.-%, besonders bevorzugt 0,25 bis 2,5 Gew.-% und am meisten bevorzugt 0,5 bis 1,5 Gew.-% mindestens eines Antioxidationsmittels,
wobei die Mengenangaben jeweils bezogen auf das Gesamtgewicht des Überzugsmittels sind.

Gemäß einer weiteren bevorzugten Ausführungsform des erfindungsgemäßen Verfahrens beinhaltet das im Verfahrensschritt III) eingesetzte Überzugsmittel
- 1 bis 20 Gew.-%, besonders bevorzugt 2,5 bis 17,5 Gew.-% und am meisten bevorzugt 5 bis 15 Gew.-% Apfelwachs,
- 75 bis 98 Gew.-%, besonders bevorzugt 80 bis 97 Gew.-% und am meisten bevorzugt 83,5 bis 94 Gew.-% Pflanzenöl, sowie
- 0,1 bis 5 Gew.-%, besonders bevorzugt 0,25 bis 2,5 Gew.-% und am meisten bevorzugt 0,5 bis 1,5 Gew.-% mindestens eines Antioxidationsmittels,
wobei die Mengenangaben jeweils bezogen auf das Gesamtgewicht des Überzugsmittels sind und in der Summe vorzugsweise 100 Gew.-% ergeben.

Es ist weiterhin erfindungsgemäß bevorzugt, dass das Apfelwachs in einer Menge in einem Bereich von 0,001 bis 0,1 Gew.-%, besonders bevorzugt in einem Bereich von 0,005 bis 0,05 Gew.-% und am meisten bevorzugt in einem Bereich von 0,005 bis 0,025 Gew.-%, jeweils bezogen auf das Gewicht der Süßware, eingesetzt wird. Weiterhin ist es erfindungsgemäß bevorzugt, dass das Überzugsmittel in einer Menge in einem Bereich von 0,01 bis 1 Gew.-%, besonders bevorzugt in einem Bereich von 0,05 bis 0,5 Gew.-% und am meisten bevorzugt in einem Bereich von 0,1 bis 0,25 Gew.-%, jeweils bezogen auf das Gewicht der Süßware, eingesetzt wird

Als Apfelwachs kommen insbesondere diejenigen Apfelwachse in Betracht, die bereits vorstehend im Zusammenhang mit der erfindungsgemäßen Süßware als bevorzugte Apfelwachse beschrieben worden sind.

Einen Beitrag zur Lösung der eingangs genannten Aufgaben leitet auch eine Süßware, vorzugsweise ein Weichbonbon oder ein Hartbonbon, welche durch das erfindungsgemäße Verfahren erhältlich ist, vorzugsweise welches durch das erfindungsgemäße Verfahren erhalten wurde.

Einen Beitrag zur Lösung der eingangs genannten Aufgaben leistet darüberhinaus die Verwendung von Apfelwachs als Überzugsmittel oder als Bestandteil eines Überzugsmittels zur Beschichtung von Süßwaren, vorzugsweise zur Herstellung von Weichbonbons oder Hartbonbons. Bevorzugte Apfelwachse sind wiederum diejenigen Apfelwachse, die bereits eingangs im Zusammenhang mit dem erfindungsgemäßen Bonbon als bevorzugte Apfelwachse beschrieben worden sind.

### BEISPIELE

Die Erfindung wird im Folgenden durch Beispiele und Zeichnungen genauer dargestellt, wobei die Beispiele und Zeichnungen keine Einschränkung der Erfindung bedeuten.

### Beispiel 1 - Fruchtgummi auf Gelatine-Basis

Beispiel 1 betrifft die erfindungsgemäße Herstellung einer erfindungsgemäßen Süßware in Form eines Fruchtgummis auf Gelatine-Basis.

Zunächst wurde ein Puderkasten als Träger für ein Formpuder bereitgestellt. Als Formpuder wurde ein Maisstärkemehl mit einem Wassergehalt von 4,5 bis 8,0g/100g bezogen auf das Maisstärkemehl verwendet. Der Puderkasten wurde mit dem Maistärkemehl befüllt und dieses zu einem ebenen Maisstärkemehlspiegel in dem Puderkasten abgezogen. Es wurde ein Formstempel aus Gips/Edelstahl zum Prägen von Negativformen für den Bonbonguss bereitgestellt. Der Formstempel bestand aus einem Halteteil und einem weiteren Teil, welcher die positive Form eines herzustellenden Bonbons hat. Hierbei entspricht die untere Stempelfläche des Formstempels, welche beim Stempeln in das Puder gedrückt wird, der Deckfläche des herzustellenden Fruchtgummis. Diese Stempelfläche beinhaltet ein Relief. Das Relief ist eine plastische Nachbildung eines Teils einer Oberfläche einer Erdbeere. Mit dem Formstempel wurden Negativformen durch Eindrücken in den Maisstärkespiegel eingeprägt. Die Negativformen wurden gleichmäßig verteilt über den Maisstärkespiegel geprägt, wobei der Formstempel nur so tief in den Maisstärkespiegel eingedrückt wurde, dass unter jeder Negativform mindestens 1 cm Maisstärkemehl verblieb. Nach jedem Prägen wurde der Formstempel senkrecht nach oben entfernt ohne die geprägte Negativform zu beschädigen.

Im Weiteren wurde durch Abwiegen der Rohstoffe eine Rezeptur für eine Fruchtgummivorläufermasse zusammengestellt. Die Rezeptur bestand aus
- 44 Gew.-% Saccharose einer Reinheit von 99,5 %, eines pH-Wertes von 7, einer Süßkraft von 100, sowie der EG-Kategorie I;
- 31 Gew.-% Glukosesirup, eingesetzt wurde ein DE 42 SE, pH-Wert 4,8 bis 5,3, Trockensubstanz ca. 80 Gew.-% des Glukosesirups, wobei die Trockensubstanz beinhaltet 6 Gew.-% Dextrose, 37 Gew.-% Maltose, und 57 Gew.-% Polysacharid, jeweils bezogen auf die Trockensubstanz;
- 17 Gew.-% Wasser, konform zur Trinkwasserverordnung;
- 6 Gew.-% Gelatine, beinhaltend 84 bis 86 Gew.-% Eiweiß, 9 bis 12 Gew.-% Wasser, 2 bis 4 Gew.-% Mineralstoffe, jeweils bezogen auf die Gelatine;
- 1,5 Gew.-% Säure, Zitronensäue Monohydrat, Restwasser 8,6 Gew.-% bezogen auf die Säure, Säurekraft 90, Inversionsgeschwindigkeit 0,64;
- 0,25 Gew.-% Farbe, aus Fruchtauszügen; und
- 0,25 Gew.-% Aroma, natürliches Aroma aus Früchten als Konzentrat;
jeweils bezogen auf die Rezeptur.

Im Weiteren wurde die Gelatine in dem Wasser gemäß dem Rezept gelöst und eine Gelatinelösung erhalten. Anschließend wurde die Saccharose der Rezeptur in einen Kupferkessel ausreichenden Fassungsvolumens gegeben und die Sacharose bei 110°C gelöst. Dann wurde der Glukosesirup hinzugegeben und die sich ergebende Lösung in dem Kupferkessel unter ständigem Rühren mit einem Rührlöffel endgekocht auf 116 °C. Die Kochzeit betrug etwa 8 Minuten. Anschließend wurde die Masse ohne Wärmezufuhr belassen und so auf etwa 90°C abgekühlt. Bei dieser Temperatur wurden die Gelatinelösung, die Farbe, das Aroma und die Säure gemäß der Rezeptur hinzugegeben, untergerührt und somit eine Weichbonbonvorläufermasse erhalten. Zum Entgasen wurde die Fruchtgummivorläufermasse 10 Minuten ruhend gelassen. Die Fruchtgummivorläufermasse wurde nun in einen Gießbeutel gegeben. Der Gießbeutel wurde verwendet, um die wie oben beschrieben erzeugten Negativformen in dem Maisstärkemehl durch Gießen mit der Fruchtgummivorläufermasse zu befüllen. Bei dem Gießen hatte die Fruchtgummivorläufermasse eine Temperatur von ca. 70 °C. Es wurden befüllte Negativformen erhalten. Die Fruchtgummivorläufermasse wurde in den Negativformen im Puderkasten im Trockenraum für 48 Stunden bei einer Temperatur von 30 °C gereift und somit Fruchtgummivorläufer erhalten. Der Puderkasten wurde nun gewendet, so dass die hergestellten Weichbonbonvorläufer aus den Negativformen entformt wurden, Fruchtgummivorläufer und Maisstärkemehl fielen aus dem Puderkasten auf ein Gittersieb. Durch Rütteln des Gittersiebs für 1 Minute wurde überschüssiges Maisstärkemehl von den Fruchtgummivorläufern entfernt. Dabei war das Gittersieb so gewählt, dass die Weichbonbonvorläufer auf dem Gittersieg verblieben und die Partikel des Maisstärkemehls durch das Gittersieb fielen und darunter in einem Behälter aufgefangen werden konnten. Zusätzlich wurden die Fruchtgummivorläufer mit Pressluft abgeblasen.

### Beispiel 2 - Fruchtgummi auf Stärke-Basis

Beispiel 2 betrifft die erfindungsgemäße Herstellung einer erfindungsgemäßen Süßware in Form eines veganen Fruchtgummis auf Stärke-Basis.

Zunächst wird ein Puderkasten als Träger für ein Formpuder bereitgestellt. Als Formpuder wird ein Maisstärkemehl verwendet welches einen Wassergehalt von 5 bis 9 g/100g bezogen auf das Maisstärkemehl, hat. Der Puderkasten wird mit dem Maistärkemehl befüllt und dieses zu einem ebenen Maisstärkemehlspiegel in dem Puderkasten abgezogen. Es wird ein Formstempel aus Gips/Edelstahl zum Prägen von Negativformen für den Bonbonguss bereitgestellt. Der Formstempel besteht aus einem Halteteil und einem weiteren Teil, welcher die positive Form eines herzustellenden Fruchtgummis hat. Hierbei weist die untere Stempelfläche des Formstempels, welche beim Stempeln in das Puder gedrückt wird, ein Relief auf. Das Relief ist eine plastische Nachbildung eines Teils einer Oberfläche einer Erdbeere. Mit dem Formstempel werden Negativformen durch Eindrücken in den Maisstärkespiegel eingeprägt. Die Negativformen werden gleichmäßig verteilt über den Maisstärkespiegel geprägt, wobei der Formstempel nur so tief in den Maisstärkespiegel eingedrückt wird, dass unter jeder Negativform mindestens 1 cm Maisstärkemehl verbleibt. Nach jedem Prägen wird der Formstempel senkrecht nach oben entfernt, ohne die geprägte Negativform zu beschädigen.

Zunächst wird durch Abwiegen der Rohstoffe eine Rezeptur für eine Fruchtgummivorläufermasse zusammengestellt. Die Rezeptur besteht aus
- 35,0 Gew.-% Saccharose,
- 45,0 Gew.-% Glukosesirup HM (*"high maltose"*) von Cargill Inc.,
- 16,05 Gew.-% modifizierte Stärken,
- 2,0 Gew.-% Fruchtsaftkonzentrat,
- 0,30 Gew.-% Aromen,
- 0,3 Gew.-% Frucht- und Pflanzenkonzentrate,
- 1,2 Gew.-% Säuren (Zitronen-, Apfel- und Milchsäure),
- 0,15 Gew.-% Trennwachs, und

Rezeptwasser in einem Verhältnis von 1 : 0,8 zu der Saccharose.

Im Weiteren werden die obigen Rohstoffe: Saccharose, modifizierte Stärken, Rezeptwasser und der Glukosesirup gemischt. Diese Mischung wird in einer Kochschlange bei einer Temperatur von ca. 125 bis 130 °C und einem Gegendruck von ca. 5 bar gekocht. Im Brüdentrennraum werden die entstandenen Kochbrüden abgeführt. Der Durchlass zum Vakuumbehälter wird mittels Nadelventil reguliert. Im Vakuumbehälter wird die Zuckermasse weiter entfeuchtet und kühlt gleichzeitig ab auf ca. 90 bis 95 °C. Die Masse wird mittels einer Pumpe kontinuierlich aus dem Vakuumbehälter abgezogen. Der Fruchtgummimasse werden die Fruchtsaftkonzentrate, die Frucht- und Pflanzenkonzentrate, die Aromen und die Säuren gemäß der Rezeptur zugegeben, untergerührt und somit eine Fruchtgummivorläufermasse hergestellt.

Die Fruchtgummivorläufermasse wird in einen Gießbeutel abgefüllt. Die Gießbeutel werden verwendet, um die wie oben beschrieben erzeugten Negativformen in dem Maisstärkemehl durch Gießen mit der Fruchtgummivorläufermasse zu befüllen. Bei dem Gießen hat die Vorläufermasse eine Temperatur von ca. 70 bis 80 °C. Es werden befüllte Negativformen erhalten. Die vergossenen Massen werden in den Negativformen im Puderkasten im Trockenraum für 48 Stunden bei einer Temperatur von 40 °C. Der Puderkasten wird nun gewendet, so dass die hergestellten Fruchtgummivorläufer aus den Negativformen entformt werden. Fruchtgummivorläufer und Maisstärkemehl fallen aus dem Puderkasten auf ein Gittersieb. Durch Rütteln des Gittersiebs für 1 Minute wird überschüssiges Maisstärkemehl von den Fruchtgummivorläufern entfernt. Dabei ist das Gittersieb so zu wählen, dass die Fruchtgummivorläufer auf dem Gittersieb verbleiben und die Partikel des Maisstärkemehls durch das Gittersieb fallen und darunter in einem Behälter aufgefangen werden können. Zusätzlich werden die Fruchtgummivorläufer mit Pressluft abgeblasen.

Die so erhaltenen Fruchtgummivorläufer aus Beispiel 1 und 2 wurden sodann in einer Wachstrommel mit 0,15 Gew.-%, bezogen auf das Gesamtgewicht der Weichbonbonvorläufer, eines Überzugsmittels beinhaltend 7,5 Gew.-% Apfelwachs (gewonnen gemäß der Vorgehensweise in Beispiel 1 auf Seite 13 der WO 93/17083 A1), 91,75 Gew.-% Sonnenblumenöl und 0,75 Gew.-% α-Tocopherol überzogen/gewachst. Dazu werden die unbehandelten Produkte in einer Wachstrommel bei kontinuierlicher Zufuhr des Überzugsmittels gedreht und gleichzeitig weitertransportiert. Durch das Aneinanderreiben der Produkte wird das Überzugsmittel auf die Oberfläche verteilt und die Fruchtgummis aus Beispiel 1 und 2 werden gewachst/versiegelt.

### Vergleichsbeispiel 1 - Fruchtgummi auf Gelatine-Basis

Ein Fruchtgummi auf Gelatine-Basis wurde gemäß Beispiel 1 hergestellt, wobei das Überzugsmittel anstelle des Apfelwachses die gleiche Menge an Bienenwachs enthielt.

### Vergleichsbeispiel 2 - Fruchtgummi auf Stärke-Basis

Ein Fruchtgummi auf Stärke-Basis wurde gemäß Beispiel 2 hergestellt, wobei das Überzugsmittel anstelle des Apfelwachses die gleiche Menge an Bienenwachs enthielt.

Die mit Apfelwachs beschichteten Fruchtgummis aus den Beispielen 1 und 2 zeigten im Vergleich zu den mit Bienenwachs beschichteten Fruchtgummis aus Vergleichsbeispiel 1 und 2 einen verbesserten Glanz und eine verminderte Tendenz, nach längerer Lagerung aneinander zu haften.

### Beispiel 3 - Vergleich zwischen Apfelwachs und Bienen- bzw. Carnaubawachs

Fruchtgummis (Katjes "*Glücksherzen*") wurden mit der gleichen Menge Überzugsmittel (beinhaltend Wachs, Sonnenblumenöl und Antioxidationsmittel (α-Tocopherol)) beschichtet. Dazu werden die unbehandelten Produkte wieder in einer Wachstrommel bei kontinuierlicher Zufuhr des Überzugsmittels gedreht. Durch das Aneinanderreiben der Produkte wird das Überzugsmittel auf die Oberfläche verteilt. Die behandelten Fruchtgummis werden sodann bei 20°C für 4 Wochen gelagert und anschließend hinsichtlich der Rieselfähigkeit mit einer Notenskala von 1 bis 5 beurteilt (dabei bedeutet "5": am Besten; "1": am Schlechtesten).

| Wachs | Menge an aufgebachtem Überzugsmittel (g/kg) | Mischdauer in der Trommel (min) | Rieselfähigkeit |
|---|---|---|---|
| AW | 0,9 | 5 | 5 |
| AW | 1,2 | 5 | 5 |
| | | | |
| BW | 0,9 | 5 | 4-5 |
| BW | 0,9 | 8 | 4-5 |
| BW | 1,2 | 3 | 4-5 |
| BW | 1,2 | 5 | 5 |
| | | | |
| CW | 0,9 | 5 | 4-5 |
| CW | 0,9 | 8 | 4-5 |
| CW | 1,2 | 5 | 4-5 |
| CW | 1,2 | 8 | 4-5 |
| CW | 1,5 | 5 | 4-5 |
| CW | 1,5 | 8 | 4-5 |
| CW | 1,8 | 5 | 5 |
| | | | |
| BCW | 0,9 | 5 | 4-5 |
| BCW | 0,9 | 8 | 4-5 |
| BCW | 1,2 | 5 | 4-5 |
| BCW | 1,2 | 8 | 4-5 |
| BCW | 1,5 | 5 | 5 |

| | | | |
|---|---|---|---|
| AW = Apfelwachs; CW = Carnaubawachs; BCW=Mischung aus Bienen- und Carnaubawachs | | | |

Es zeigt sich, dass die Dosierung des Apfelwachses mit 0,9 g/kg des Überzugsmittels bei 5 min in der Trommel zu gleich guten Ergebnissen führt wie bienenwachshaltiges Überzugsmittel mit einer Dosierung von 1,2 g/kg des Überzugsmittels bei 5 min in der Trommel, carnaubawachshaltiges Überzugsmittel mit einer Dosierung von 1,8 g/kg des Überzugsmittels bei 5 min in der Trommel und Überzugsmittel beinhaltend einen Bienenwachs-Carnaubawachsmix mit einer Dosierung von 1,5 g/kg des Überzugsmittels bei 5 min in der Trommel. Er werden also vergleichbar gute Ergebnisse mit weniger Rohmaterialeinsatz bei kürzerer Behandlungsdauer erzielt. Der Glanz war in allen Proben vergleichbar gut.

Es zeigen:
- Figur 1: eine erfindungsgemäße Süßware im Querschnitt;
- Figur 2: einen Süßwarenvorläufer vor der Beschichtung mit einem Überzugsmittel im Querschnitt;
- Figur 3: eine schematische Darstellung des erfindungsgemäßen Verfahrens zur Herstellung einer Süßware.

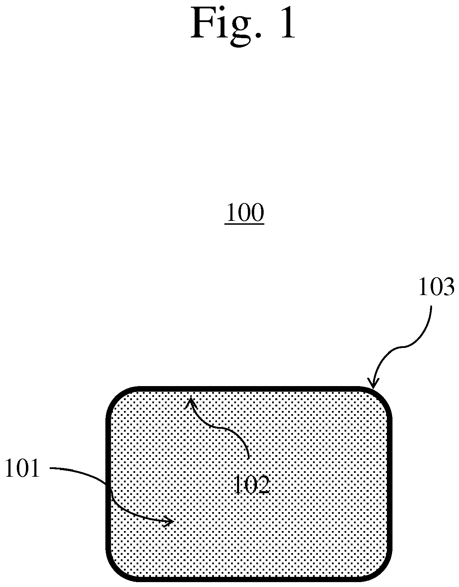

Figur 1 zeigt eine erfindungsgemäße Süßware 100 in der Ausgestaltung eines Bonbons im Querschnitt. Die Süßware bzw. das Bonbon 100 umfasst einen Kern 101 und eine den Kern 100 begrenzende äußere Oberfläche 102, welche gemäß der Figur 1 vollständig mit einem Überzugsmittel 103 beinhaltend Apfelwachs, Öl und Antioxidationsmittel beschichtet ist.

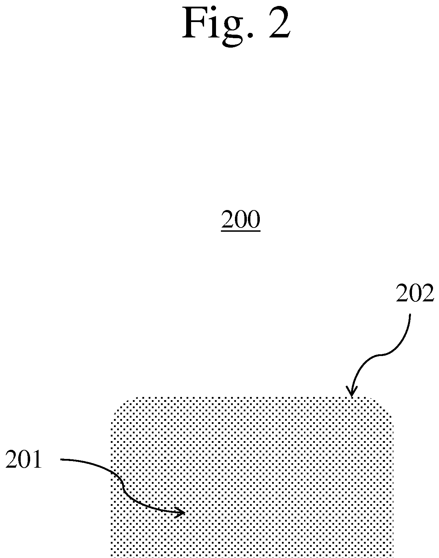

Figur 2 zeigt einen Süßwarenvorläufer 200, wie er nach Verfahrensschritt II) des erfindungsgemäßen Verfahrens erhältlich ist. Der Süßwarenvorläufer umfasst einen Kern 201 und eine den Kern 201 begrenzende äußere Oberfläche 202.

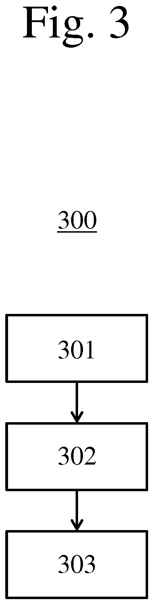

Figur 3 zeigt ein Ablaufdiagramm eines erfindungsgemäßen Verfahrens 100 zum Herstellen einer Süßware 100. In einem Verfahrensschritt I) 301 wird zunächst eine Süßwarenvorläufermasse bereitgestellt. In Verfahrensschritt II) 302 wird sodann die Süßwarenvorläufermasse unter Erhalt eines in Figur 2 gezeigten Süßwarenvorläufers 200 umfassend einen Kern 201 und eine den Kern 201 begrenzende äußere Oberfläche 202 geformt. Dieser Verfahrensschritt kann beispielsweise das Einbringen der Süßwarenvorläufermasse in eine entsprechende Negativform und das anschließende Härten der Süßwarenvorläufermasse in der Form durch Abkühlen unter Erhalt eines Süßwarenvorläufers 200 oder das Überführen der Süßwarenvorläufermasse in die gewünschte Form mittels 3D-Druckern, gefolgt von einem Härten durch Trocknen unter Erhalt eines Süßwarenvorläufers 200, umfassen. In Verfahrensschritt III) 303 wird dann zumindest einem Teil der äußeren Oberfläche 202 des Süßwarenvorläufers 200, vorzugsweise die gesamte äußere Oberfläche des Kerns 201, mit einem Apfelwachs beinhaltenden Überzugsmittel 103 beschichtet. Dieses Beschichten kann beispielsweise dadurch erfolgen, dass die Süßwarenvorläufe 200 in einer geeigneten Mischvorrichtung mit dem in flüssiger Form vorliegenden Überzugsmittel gewachst werden.

### LISTE DER BEZUGSZEICHEN

- **100**: erfindungsgemäße Süßware
- **101**: Kern
- **102**: äußere Oberfläche
- **103**: Überzugsmittel
- **200**: Süßwarenvorläufer
- **201**: Kern
- **202**: äußere Oberfläche
- **300**: Verfahren
- **301**: Verfahrensschritt I)
- **302**: Verfahrensschritt II)
- **303**: Verfahrensschritt III)

## Patentansprüche

1. Eine Süßware (100) umfassend einen Kern (101) und eine den Kern (101) begrenzende äußere Oberfläche (102), wobei zumindest ein Teil der äußeren Oberfläche (102) des Kerns (101) mit einem Überzugsmittel (103) beschichtet ist,
**dadurch gekennzeichnet, dass** das Überzugsmittel (103) Apfelwachs beinhaltet.

2. Die Süßware (100) nach Anspruch 1, wobei die Süßware (100) ein Hartbonbon oder ein Weichbonbon ist.

3. Die Süßware (100) nach Anspruch 1 oder 2, wobei das Überzugsmittel (103) Apfelwachs, Pflanzenöl und mindestens ein Antioxidationsmittel beinhaltet.

4. Die Süßware (100) nach Anspruch 3, wobei das Überzugsmittel (103)
- 1 bis 20 Gew.-% Apfelwachs,
- 50 bis 98 Gew.-% Pflanzenöl, sowie
- 0,1 bis 5 Gew.-% mindestens eines Antioxidationsmittels,
jeweils bezogen auf das Gesamtgewicht des Überzugsmittels (103), beinhaltet.

5. Die Süßware (100) nach einem der Ansprüche 1 bis 4, wobei die Süßware (100) Apfelwachs in eine Menge in einem Bereich von 0,001 bis 0,1 Gew.-%, bezogen auf das Gewicht der Süßware (100), beinhaltet.

6. Die Süßware (100) nach einem der Ansprüche 1 bis 5, wobei das Apfelwachs erhältlich ist durch ein Verfahren umfassend die Verfahrensschritte:
i) Extraktion einer Apfelschalen beinhaltenden Zusammensetzung mit organischen Lösungsmitteln;
ii) zumindest teilweises Verdampfen des organischen Lösungsmittels aus dem Extrakt unter Erhalt von Apfelwachs.

7. Die Süßware (100) nach Anspruch 6, wobei die Apfelschalen beinhaltende Zusammensetzung entpektinisierter Apfeltrester ist.

8. Die Süßware (100) nach Anspruch 6 oder 7, wobei das organische Lösungsmittel ausgewählt ist aus der Gruppe bestehend aus Alkoholen, Ethern, Kohlenwasserstoffen, halogenierten Kohlenwasserstoffen oder einer Mischung aus mindestens zwei davon.

9. Die Süßware (100) nach einem der Ansprüche 1 bis 8, wobei das Apfelwachs mindestens eine der folgenden Eigenschaften verwirklicht:
(α) einen Gehalt an Nonacosan in einem Bereich von 10 bis 50 Gew.-%, bezogen auf das Gesamtgewicht des Apfelwaches;
(β) einen Gehalt an Urolsäure in einem Bereich von 20 bis 80 Gew.-%, bezogen auf das Gesamtgewicht des Apfelwaches.

10. Ein Verfahren (300) zur Herstellung einer Süßware (100), umfassend die Verfahrensschritte (301, 302, 303)
I) Bereitstellen einer Süßwarenvorläufermasse;
II) Formen der Süßwarenvorläufermasse unter Erhalt eines Süßwarenvorläufers (200) umfassend einen Kern (201) und eine den Kern (201) begrenzende äußere Oberfläche (202);
III) Beschichten von zumindest einem Teil der äußeren Oberfläche (202) des Kerns (201) mit einem Überzugsmittel (103);
**dadurch gekennzeichnet, dass** das Überzugsmittel (103) Apfelwachs beinhaltet.

11. Das Verfahren (300) nach Anspruch 10, wobei die im Verfahrensschritt I) (301) bereitgestellte Süßwarenvorläufermasse eine Weichbonbonvorläufermasse oder eine Hartbonbonvorläufermasse ist.

12. Das Verfahren (300) nach Anspruch 10 oder 11, wobei das im Verfahrensschritt III) (303) eingesetzte Überzugsmittel (103) ein Überzugsmittel ist, wie es in den Ansprüchen 3 und 4 definiert ist.

13. Das Verfahren (300) nach einem der Ansprüche 10 bis 12, wobei das Apfelwachs ein Apfelwachs ist, wie es in einem der Ansprüche 6 bis 9 definiert ist.

14. Eine Süßware (100), erhältlich durch das Verfahren (300) nach einem der Ansprüche 10 bis 13.

15. Verwendung von Apfelwachs als Überzugsmittel (103) oder als Bestandteil eines Überzugsmittels (103) zur Beschichtung von Süßwaren (100).

## Claims

1. A confectionery (100) comprising a core (101) and an outer surface (102) bordering the core (101), wherein at least part of the outer surface (102) of the core (101) is coated with a coating agent (103),
**characterised in that** the coating agent (103) comprises apple wax.

2. The confectionery (100) according to claim 1, wherein the confectionery (100) is a hard candy or a soft candy.

3. The confectionery (100) according to claim 1 or 2, wherein the coating agent (103) comprises apple wax, vegetable oil and at least one antioxidant.

4. The confectionery (100) according to claim 3, wherein the coating agent (103) comprises
- 1 to 20 wt.% apple wax,
- 50 to 98% by weight vegetable oil, and
- 0.1 to 5% by weight of at least one antioxidant,
in each case based on the total weight of the coating agent (103).

5. The confectionery (100) according to any one of claims 1 to 4, wherein the confectionery (100) comprises apple wax in an amount in a range of 0.001 to 0.1% by weight based on the weight of the confectionery (100).

6. The confectionery (100) according to any one of claims 1 to 5, wherein the apple wax is obtainable by a process comprising the steps of:
i) extraction of a composition containing apple peel with organic solvents;
ii) at least partial evaporation of the organic solvent from the extract to obtain apple wax.

7. The confectionery (100) according to claim 6, wherein the composition comprising apple peels is depectinised apple pomace.

8. The confectionery (100) of claim 6 or 7, wherein the organic solvent is selected from the group consisting of alcohols, ethers, hydrocarbons, halogenated hydrocarbons, or a mixture of at least two thereof.

9. The confectionery (100) according to any one of claims 1 to 8, wherein the apple wax realises at least one of the following properties:
(α ) a content of nonacosan in a range of 10 to 50 % by weight, based on the total weight of the apple wax;
(β ) a content of urolic acid in a range of 20 to 80 % by weight, based on the total weight of the apple wax.

10. A method (300) for producing a confectionery (100), comprising the steps (301, 302, 303) of
I) providing a confectionery precursor mass;
II) shaping the confectionery precursor mass to obtain a confectionery precursor (200) comprising a core (201) and an outer surface (202) bordering the core (201);
III) coating at least part of the outer surface (202) of the core (201) with a coating agent (103);
**characterised in that** the coating agent (103) comprises apple wax.

11. The process (300) according to claim 10, wherein the confectionery precursor mass provided in process step I) (301) is a soft candy precursor mass or a hard candy precursor mass.

12. The process (300) according to claim 10 or 11, wherein the coating agent (103) used in process step III) (303) is a coating agent as defined in claims 3 and 4.

13. The method (300) according to any one of claims 10 to 12, wherein the apple wax is an apple wax as defined in any one of claims 6 to 9.

14. A confectionery (100) obtainable by the process (300) according to any one of claims 10 to 13.

15. Use of apple wax as a coating agent (103) or as a component of a coating agent (103) for coating confectionery (100).

## Revendications

1. Confiserie (100) comprenant un noyau (101) et une surface extérieure (102) délimitant le noyau (101), dans laquelle au moins une partie de la surface extérieure (102) du noyau (101) est revêtue d'un agent de revêtement (103),
**caractérisé en ce que** l'agent de revêtement (103) comprend de la cire de pomme.

2. La confiserie (100) selon la revendication 1, dans laquelle la confiserie (100) est un bonbon dur ou un bonbon mou.

3. La confiserie (100) selon la revendication 1 ou 2, dans laquelle l'agent de revêtement (103) comprend de la cire de pomme, de l'huile végétale et au moins un antioxydant.

4. La confiserie (100) selon la revendication 3, dans laquelle le produit de revêtement (103)
- 1 à 20 % en poids de cire de pomme,
- 50 à 98 % en poids d'huile végétale, et
- 0,1 à 5 % en poids d'au moins un antioxydant,
par rapport au poids total de l'agent de revêtement (103).

5. Confiserie (100) selon l'une quelconque des revendications 1 à 4, dans laquelle la confiserie (100) comprend de la cire de pomme en une quantité comprise dans une plage de 0,001 à 0,1 % en poids par rapport au poids de la confiserie (100).

6. La confiserie (100) selon l'une des revendications 1 à 5, dans laquelle la cire de pomme peut être obtenue par un procédé comprenant les étapes de procédé :
i) Extraction d'une composition contenant des pelures de pomme avec des solvants organiques ;
ii) l'évaporation au moins partielle du solvant organique de l'extrait pour obtenir de la cire de pomme.

7. La confiserie (100) selon la revendication 6, dans laquelle la composition contenant la peau de pomme est du marc de pomme depectiné.

8. La confiserie (100) selon la revendication 6 ou 7, dans laquelle le solvant organique est choisi dans le groupe constitué par les alcools, les éthers, les hydrocarbures, les hydrocarbures halogénés ou un mélange d'au moins deux d'entre eux.

9. La confiserie (100) selon l'une quelconque des revendications 1 à 8, dans laquelle la cire de pomme réalise au moins l'une des propriétés suivantes :
(α ) une teneur en nonacosane comprise dans une fourchette de 10 à 50 % en poids, par rapport au poids total de la cire de pomme ;
(β ) une teneur en acide urolique comprise dans une fourchette de 20 à 80 % en poids par rapport au poids total de la cire de pomme.

10. Procédé (300) de fabrication d'une confiserie (100), comprenant les étapes de procédé (301, 302, 303) suivantes
I) Fournir un précurseur de confiserie ;
II) le moulage de la masse de précurseur de confiserie pour obtenir un précurseur de confiserie (200) comprenant un noyau (201) et une surface extérieure (202) délimitant le noyau (201) ;
III) revêtir au moins une partie de la surface extérieure (202) du noyau (201) avec un agent de revêtement (103) ;
**caractérisé en ce que** l'agent de revêtement (103) comprend de la cire de pomme.

11. Le procédé (300) selon la revendication 10, dans lequel la masse précurseur de confiserie préparée à l'étape I) (301) du procédé est une masse précurseur de bonbon mou ou une masse précurseur de bonbon dur.

12. Le procédé (300) selon la revendication 10 ou 11, dans lequel l'agent de revêtement (103) utilisé dans l'étape III) (303) du procédé est un agent de revêtement tel que défini dans les revendications 3 et 4.

13. Le procédé (300) selon l'une quelconque des revendications 10 à 12, dans lequel la cire de pomme est une cire de pomme telle que définie dans l'une quelconque des revendications 6 à 9.

14. Confiserie (100) pouvant être obtenue par le procédé (300) selon l'une quelconque des revendications 10 à 13.

15. Utilisation de cire de pomme comme agent de revêtement (103) ou comme composant d'un agent de revêtement (103) pour le revêtement de confiseries (100).
